# EUROPEAN PATENT SPECIFICATION

(11) **EP 0 736 503 B1**
(45) Date of publication and mention of the grant of the patent: **17.07.2002**
(21) Application number: 96105479.8
(22) Date of filing: 04.04.1996
(51) Int. Cl.: C04B 41/45, C04B 41/50, C04B 38/00, B01D 39/20

(54) **Exhaust gas purifying filter and processes for its production**
Abgasreinigungsfilter und Verfahren zu dessen Herstellung
Filtre pour la purification de gaz d'échappement et procédé de production de celui-ci

(30) Priority: 05.04.1995 JP 10696895; 08.02.1996 JP 4815196
(43) Date of publication of application: 09.10.1996
(73) Proprietor: DENSO CORPORATION, Kariya-City, Aichi-Pref. (JP)
(72) Inventor: Kondo, Toshiharu, c/o Nippondenso Co., Ltd., Kariya-city, Aichi-pref. 448 (JP); Ito, Keiji, c/o Nippondenso Co., Ltd., Kariya-city, Aichi-pref. 448 (JP); Kageyama, Terutaka, c/o Nippondenso Co., Ltd., Kariya-city, Aichi-pref. 448 (JP); Obata, Takashi, c/o Nippondenso Co., Ltd., Kariya-city, Aichi-pref. 448 (JP)
(74) Representative: Winter, Brandl, Fürniss, Hübner, Röss, Kaiser, Polte Partnerschaft

(56) References cited:
- EP-A- 0 306 350
- EP-A- 0 391 321
- WO-A-89/05285

## Description

The present invention relates to an exhaust gas purifying filter which is used, for example, to collect diesel particulates, and to processes for its production.

Document WO89/05285 relates to a purifying filter in which a coating layer is formed on the surface of a matrix.

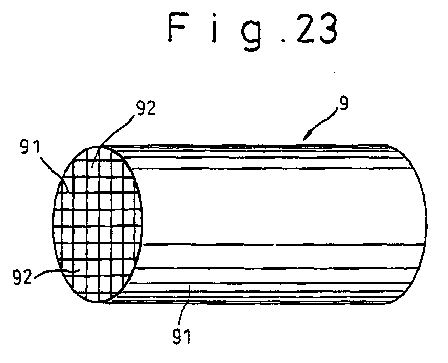

Particulates ejected from a diesel engine are collected by a honeycomb filter 9 as shown in Fig. 23, for example. This filter 9 comprises a porous matrix 91 and a plurality of fluid channels 92 formed between the matrix 91.

For improved particulate collection efficiency, an improved regeneration rate and exhaust gas purification, the idea has been proposed to form a coating layer made of catalyst-supporting active alumina in the interior or on the surface of the matrix, by the following methods.

The first method is one for controlling the distribution of the amount of catalyst supported in the direction of depth of the coating layer (Japanese Unexamined Patent Publication No. 1-107847). For the catalyst-supporting coating layer, this method uses active alumina with a specific surface area of as large as 150 m²/g.

The second method is one whereby alumina is coated onto the surface of the pores inside the filter matrix while the excess alumina is drawn off under reduced pressure, to form a coating (Japanese Unexamined Patent Publication No. 2-102707).

The third method is one whereby the coating amount of alumina, as one of the components of the coating, is set within a given range, and given minimum values are set for the size and volume of the pores formed between the alumina powder (Japanese Unexamined Patent Publication No. 2-107340).

The above-mentioned conventional exhaust gas purifying filters, however, are associated with the following problems.

That is, in the first method, although the active alumina has a high specific surface area, the particles are as fine as 5-10 µm, thus creating a high density. This leads to higher resistance when gas passes through the coating layer, resulting in greater pressure loss of the gas flow and lower engine output.

In the second method, suction by a decompression pump allows alumina to be drawn off from sections of the coating layer with low resistance, but the resistance in the sections opened by suction is further lowered, causing air to be concentrated in those sections. As a result, the alumina in the other sections cannot be sufficiently drawn off. Also, the alumina in the sections with small-sized pores aggregates, and thus the pores of the coating layer are not completely opened by the suction force of the suction pump. It is therefore impossible to open the pores through the entire filter.

In the third method, although the pore sizes and volume are restricted the method of forming the pores is not clear, and even when pores are present, increased resistance results with those that are not communicating, thus reducing the effect of lowering the pressure loss.

In light of these drawbacks of the prior art, it is an object of the present invention to provide an exhaust gas purifying filter which is capable of improving purification efficiency while minimizing pressure loss, as well as processes for its production.

This object is solved by processes according to claims 1, 4, 5, 6, respectively and by a filter according to independent claim 9.

The following 4 processes are provided as processes for producing an exhaust gas purifying filter according to the invention.

A production process according to the background of the invention, is a process for producing an exhaust gas purifying filter characterized by
coating a mixture of ceramic powder and a communicating pore-forming material onto the surface of a matrix with multiple pores,
and then heating the mixture to sinter the ceramic powder and form a coating layer on the surface of the matrix while burning off the communicating pore-forming material, in order to form communicating pores in the coating layer which communicate from its surface to the surface of the matrix.

With this production process according to the background of the invention it is possible to form a coating layer with a high specific surface area on the surface of the matrix. Consequently, when an exhaust gas purifying catalyst is supported on the coating layer, the contact area between the catalyst and the exhaust gas is increased, thus enabling the catalyst to exhibit its maximum catalytic performance.

Furthermore, since it is possible to form communicating pores in the coating layer which communicate from its surface to the matrix, the exhaust gas may pass smoothly through the communicating pores from the surface of the coating layer to the matrix, thus resulting in low pressure loss.

Moreover, the exhaust gas not only contacts the surface of the coating layer, but also enters the interior. Thus, by supporting an exhaust gas purifying catalyst in the coating layer, it is possible to achieve a three-dimensional purification effect throughout the coating layer. Consequently, improvement in the purification performance of the filter may be realized.

Such high purification performance and low pressure loss of the filter as described above also allow it to be downsized.

According to this production process according to the background of the invention, therefore, it is possible to obtain an exhaust gas purifying filter with excellent purification performance and low pressure loss.

An example of a preferred communicating pore-forming material, is a gas-generating substance. This is because gas is generated from the gas-generating substance upon heating, and escape of the gas from the coating layer forms communicating pores in the coating layer which communicate from its surface to the matrix.

The above-mentioned gas-generating substance may be, for example, Microsphere produced by Matsumoto Yushi Pharmaceutical, consisting of butane gas included in a thermoplastic resin.

Another example of a preferred communicating pore-forming material, is a flammable substance with a size which is either equal to or larger than the thickness of the coating layer. This is because the flammable substance burns off upon heating, forming communicating pores which communicate from the surface of the coating layer to the matrix.

The above-mentioned flammable substance may be a material such as carbon, resin, wax, etc. The flammable substance may be in the form of, for example, whiskers, a needle shape (fibers, etc.), spheres or columns.

Also, the size of the communicating pore-forming material is preferably the same as or smaller than the pores of the matrix. This allows the communicating pore-forming material to smoothly penetrate into the pores, to form the communicating pores in the coating layer which coats the inner surface of the pores. If, instead, the size of the communicating pore-forming material is larger than that of the pores of the matrix, the communicating pore-forming material will not enter into the pores, possibly resulting in clogging of the ceramic powder inside the pores and a larger pressure loss by the filter.

Communicating pore-forming materials with different sizes may also be added to the ceramic powder. This allows formation of a coating layer with uniformly distributed communicating pores of differing sizes throughout the entire coating layer.

The matrix may also be coated separately with a ceramic powder containing a communicating pore-forming material of one size and a ceramic powder containing a communicating pore-forming material of another size. This allows variation of the size of the communicating pores depending on the thickness of the coating layer.

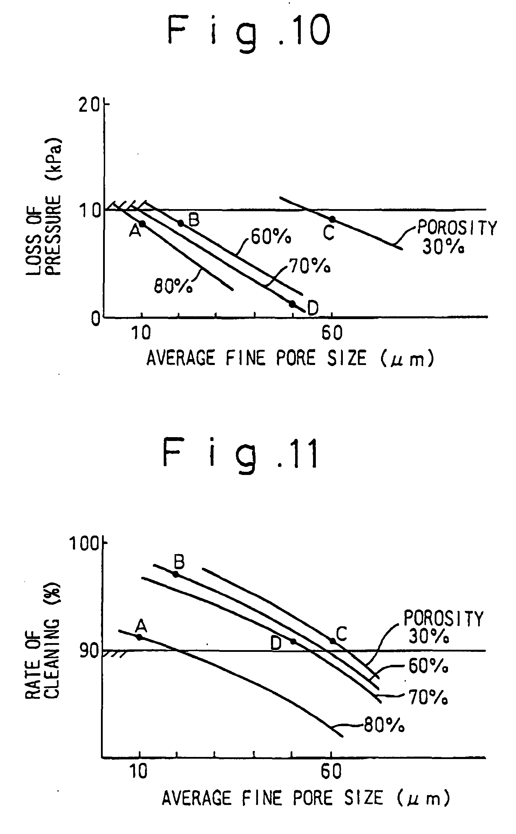

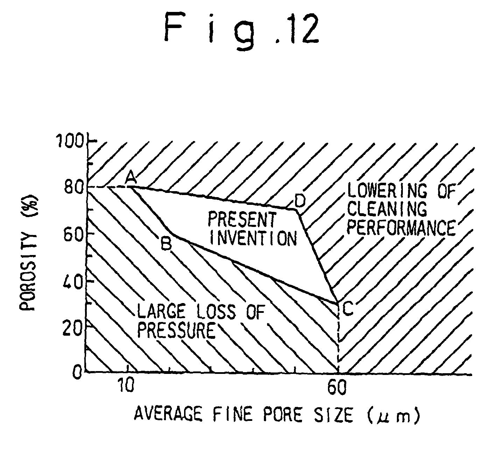

Also, the average pore size of the above-mentioned communicating pores is preferably 10-60 µm. If it is less than 10 µm, the purification performance of the filter will be improved, but with a high risk of pressure loss by the filter. On the other hand, if it exceeds 60 µm, there is lower risk of pressure loss by the filter, but greater risk of the exhaust gas passing through the filter without being purified, thus lowering the purification performance of the filter (see Figs. 10, 11).

The porosity of the above-mentioned coating layer is preferably 30-80%. At less than 30%, the risk of pressure loss by the filter is increased. At greater than 80%, the risk of lower purification performance of the filter is increased (see Figs. 10, 11).

Here, "porosity" refers to the percentage of pores including communicating pores and a small number of fine pores, with respect to the apparent volume of the coating layer.

The above-mentioned coating layer formed on the surface of the matrix has the function of enlarging the contact area between the catalyst and the exhaust gas, to exhibit the maximum catalytic performance of the catalyst. The surface of the matrix refers to at least the upper or lower side of the matrix.

The coating layer may be formed on the surface of the matrix, for example, by a method in which the matrix is impregnated with a liquid containing a mixture of ceramic powder and communicating pore-forming material, which has a larger pore size than the matrix.

The coating layer may be a ceramic powder such as, for example, active alumina or zeolite. Of these, active alumina is preferred. The high heat resistance of active alumina is suitable because of the high temperature use environment.

A three-dimensional network of many pores may be formed inside the matrix. The matrix may be, for example, cordierite or SiC (silicon carbide).

The first production process according to the invention, as according to claim 1, is a process for producing an exhaust gas purifying filter characterized by coating a mixture of ceramic powder and a communicating pore-forming material onto the surface of a matrix with multiple pores, while introducing the same mixture to the inner surface of the pores inside the matrix,
and then heating the mixture to sinter the ceramic powder and form a coating layer on the surface of the matrix and the inner surface of the pores in the matrix, while burning off the communicating pore-forming material, in order to form communicating pores in the coating layer which communicate from its surface to the surface of the matrix or the inner surface of the pores in the matrix.

According to this production process according to the invention, it is possible to form a uniform coating layer not only on the surface of the matrix but also on the inner surface of the pores in the matrix. Thus, when an exhaust gas-purifying catalyst is supported on the coating layer, the catalyst adheres not only to the surface of the matrix, but also to the inner surface of the pores in the matrix. As a result, the exhaust gas is purified by the catalyst not only on the surface of the matrix but also inside the matrix. This notably improves the exhaust gas purification performance.

The other effects achieved by the first production process are the same as with the production process according to the background of the invention.

An example of a method for introducing the above-mentioned mixture into the pores inside the matrix while coating the surface of the matrix with the mixture, is one in which the matrix is impregnated with a solution containing the above-mentioned mixture (impregnation method). When the matrix is a honeycomb filter, the method may be one in which the aforementioned solution is run from one open end of the honeycomb filter and drawn toward the opposite open end (suction method), or one in which the solution is pressed by air from one open end of the honeycomb filter (air pressure method).

The same communicating pore-forming material is preferably used in the second production process as in the first production process. The other details of the second production process are the same as for the first production process.

A further production process according to the background of the invention, is a process for producing an exhaust gas purifying filter characterized by coating 2 or more ceramic powders with different shrinkage factors onto the surface of a matrix with multiple pores, and heating it,
to sinter the ceramic powder to form a coating layer on the surface of the matrix, while generating multiple microcracks in the coating layer, in order to form communicating pores in the coating layer which communicate from its surface to the surface of the matrix.

According to this production process according to the background of the invention, there is no need to use the communicating pore-forming material used in the first and second production processes. Consequently, production of the filter is simpler than by the first and second production process.

The other effects achieved by the further production process according to the background of the invention are the same as with the above production process according to the background of the invention.

As the aforementioned 2 or more ceramic powders with different shrinkage factors there may be used, for example, a ceramic powder consisting of a combination of alumina and cordierite.

The second production process according to the present invention, as according to claim 4, is a process for producing an exhaust gas purifying filter characterized by coating two or more ceramic powders with different shrinkage factors onto the surface of a matrix with multiple pores, while introducing the ceramic powders onto the inner surface of the pores inside the matrix,
and then heating the ceramic powder,
to sinter the ceramic powder and form a coating layer on the surface of the matrix and the inner surface of the pores in the matrix, while generating multiple microcracks in the coating layer, in order to form communicating pores in the coating layer which communicate from its surface to the surface of the matrix or the inner surface of the pores in the matrix.

According to this production process, it is possible to form a uniform coating layer not only on the surface of the matrix but also on the inner surface of the pores in the matrix. The other effects achieved by the second production process are the same as with the production processes according to the background of the invention.

Examples of methods for introducing the above-mentioned ceramic powders onto the surface of the pores inside the matrix while coating the surface of the matrix with the ceramic powders, include the impregnation method, suction method and air pressure method explained for the first production process.

As the aforementioned two or more ceramic powders with different shrinkage factors there may be used, for example, a ceramic powder consisting of a combination of alumina and cordierite.

A production process according to the background of the invention, is a process for producing an exhaust gas purifying filter characterized by adding a high viscosity oily substance to a slurry containing a ceramic powder and vigorously mixing the slurry to form fine oily particles made of the high viscosity oily substance,
and then coating the slurry onto the surface of a matrix with multiple pores, and heating it,
to sinter the ceramic powder to form a coating layer on the surface of the matrix, while generating gas inside the coating layer due to the fine oily particles, thus eliminating the fine oily particles and causing the gas to escape out from the coating layer, in order to form communicating pores which communicate from the surface of the coating layer to the surface of the matrix.

The aforementioned high viscosity oily substance becomes small fine oily particles when mixed in the slurry. The fine oily particles are eliminated when they generate gas upon heating. When the generated gas escapes out from the coating layer, it forms communicating pores which communicate to the surface of the coating layer. It thus becomes possible to produce an exhaust gas purifying filter provided with a coating layer with communicating pores.

The other effects achieved by this production process are the same as with the above production process according to the background of the invention.

The aforementioned high viscosity oily substance may be, for example, a lubricating oil such as Uniway (tradename) by Nihon Sekiyu.

The third production process, as according to claim 5, is a process for producing an exhaust gas purifying filter characterized by adding a high viscosity oily substance to a slurry containing a ceramic powder and vigorously mixing the slurry to form fine oily particles made of the high viscosity oily substance,
and then coating the slurry onto the surface of a matrix with multiple pores while introducing the slurry onto the inner surface of the pores inside the matrix,
and then heating the slurry,
to sinter the ceramic powder to form a coating layer on the surface of the matrix and the inner surface of the matrix, while generating gas inside the coating layer due to the fine oily particles, thus eliminating the fine oily particles and causing the gas to escape out from the coating layer, in order to form communicating pores which communicate from the surface of the coating layer to the surface of the matrix or the inner surface of the pores inside the matrix.

According to this production process, it is possible to form a uniform coating layer not only on the surface of the matrix but also on the inner surface of the pores in the matrix. The other effects achieved by the third production process are the same as with the production processes described above.

Examples of methods for introducing the above-mentioned slurry onto the inner surface of the pores in the matrix while coating the surface of the matrix with the slurry include the impregnation method, suction method and air pressure method explained for the first production process.

The aforementioned high viscosity oily substance may be, for example, the lubricating oil mentioned above.

A production process according to the background of the invention, is a process for producing an exhaust gas purifying filter characterized by applying a foaming material which foams into a network onto the surface of a matrix with multiple pores,
foaming the foaming material,
and then coating the surface of the foamed foaming material with a slurry containing a ceramic powder, to a thickness which is either equal to or larger than the size of the foamed foaming material, and heating it
to sinter the ceramic powder to form a coating layer on the surface of the matrix while burning off the foaming material, in order to form communicating pores which communicate as a network from the surface of the coating layer to the surface of the matrix.

According to this production process according to the background of the invention, the foaming material is foamed in advance to allow formation of sponge-like communicating pores. The foaming material may be, for example, crude urethane.

The effects achieved by this production process are the same as with the above production process according to the background of the invention.

The fourth production process, as according to claim 6, is a process for producing an exhaust gas purifying filter characterized by coating a foaming material which foams into a network onto the surface of a matrix with multiple pores, while introducing the foaming material onto the inner surface of the pores inside the matrix,
foaming the foaming material,
and then coating the surface of the foamed foaming material with a slurry containing a ceramic powder, to a thickness which is either equal to or larger than the size of the foamed foaming material, and heating it
to sinter the ceramic powder to form a coating layer on the surface of the matrix and the inner surface of the pores inside the matrix, while burning off the foaming material, in order to form communicating pores which communicate as a network from the surface of the coating layer to the surface of the matrix or the inner surface of the pores inside the matrix.

According to this production process, it is possible to form a uniform coating layer not only on the surface of the matrix but also on the inner surface of the pores in the matrix. The other effects achieved by the fourth production process are the same as with the above production processes.

Examples of methods for introducing the above-mentioned foaming material onto the inner surface of the pores inside the matrix while coating the surface of the matrix with the foaming material, include the impregnation method, suction method and air pressure method explained for the second production process.

The foaming material may be, for example, crude urethane.

The exhaust gas purifying filter according to the background of the invention invention is, an exhaust gas purifying filter, having a matrix with multiple pores and a coating layer provided on the surface of the matrix, supporting a catalyst which purifies exhaust gas emitted from an internal combustion engine, characterized in that the coating layer has communicating pores which communicate from its surface to the surface of the matrix, and the porosity of the coating layer is 30-80%.

The above-mentioned exhaust gas purifying filter is provided with communicating pores in the coating layer which communicate from its surface to the matrix. Thus, as mentioned above, the exhaust gas purifying filter has low pressure loss and high purification performance, and downsizing of the filter may be achieved.

Because the porosity of the coating layer of the above-mentioned exhaust gas purifying filter is between 30 and 80%, the filter may provide high purification performance while maintaining low pressure loss.

A porosity of less than 30% increases the pressure loss of the filter. The purification performance of the filter is lowered with a porosity of greater than 80%.

The average pore size of the above-mentioned communicating pores is preferably 10-60 µm. This is in order to reduce the pressure loss of the filter and increase the purification performance, as explained above.

Furthermore, the coating layer preferably coats both the surface of the matrix and the inner surface of the pores inside the matrix. This is in order to achieve a more notable increase in the exhaust gas purification performance of the filter.

The exhaust gas purifying filter of the present invention is an exhaust gas purifying filter according to claim 10, having a matrix with multiple pores and a coating layer provided on the surface of the matrix and the inner surface of the pores inside the matrix, supporting a catalyst which purifies exhaust gas emitted from an internal combustion engine,
characterized in that the coating layer has communicating pores which communicate from its surface to the surface of the matrix or the inner surface of the pores inside the matrix, and the porosity of the coating layer is 30-80%.

In this exhaust gas purifying filter the coating layer is formed not only on the surface of the matrix but also on the inner surface of the pores inside the matrix. Thus, the catalyst supported on the coating layer adheres not only to the surface of the matrix, but also to the inner surface of the pores inside the matrix. As a result, the exhaust gas is purified by the catalyst not only on the surface of the matrix but also on the inner surface of the pores inside the matrix. This notably improves the exhaust gas purification performance.

The other details of the exhaust gas purifying filter are the same as for the exhaust gas purifying filter described above, and the exhaust gas purifying filter also provides the same effects as the above exhaust gas purifying filter.

The present invention provides, therefore, an exhaust gas purifying filter and a process for its production, whereby purification performance is improved while pressure loss is minimized.

### BRIEF DESCRIPTION OF THE DRAWINGS

Fig. 1 is a cross-sectional diagram of the wall of the exhaust gas purifying filter of Example 1, cut along the line A-A of Fig. 3.

Fig. 2 is a surface diagram of the wall of the exhaust gas purifying filter of Example 1, showing the size of the communicating pores of the coating layer.

Fig. 3 is a perspective view of the exhaust gas purifying filter of Example 1, showing the honeycomb structure of the matrix.

Fig. 4 is a diagram showing the flow of exhaust gas in the exhaust gas purifying filter of Example 1.

Fig. 5 is a diagram showing a method of forming communicating pores with a gas-generating substance, according to Example 1.

Fig. 6 is a diagram of an exhaust gas purifying filter as a comparison to Example 1.

Fig. 7 is a line graph showing the pore characteristics (pore size and pore volume) of different exhaust gas purifying filters of Experiment Example 1.

Fig. 8 is a bar graph showing the specific surface area of different exhaust gas purifying filters of Experiment Example 1.

Fig. 9 is a graph showing the change in pressure loss over time with different exhaust gas purifying filters of Experiment Example 1.

Fig. 10 is a correlation diagram for average pore size and porosity of the coating layer and filter pressure loss, according to Experiment Example 2.

Fig. 11 is a correlation diagram for average pore size and porosity of the coating layer and filter purification rate of exhaust gas, according to Experiment Example 2.

Fig. 12 is drawing showing the region of average pore size and porosity of the coating layer wherein the purification rate is high and the pressure loss is low, according to Experiment Example 2.

Fig. 13 is a diagram of a process for producing the exhaust gas purifying filter of Example 2.

Fig. 14 is a diagram of a process for producing the exhaust gas purifying filter of Example 3.

Fig. 15 is a diagram of a process for producing the exhaust gas purifying filter of Example 4.

Fig. 16 is a cross-sectional diagram of the wall of the exhaust gas purifying filter of Example 5, showing the size of the communicating pores of the coating layer.

Fig. 17 is a cross-sectional diagram of the wall of the exhaust gas purifying filter of Example 6, showing the size of the communicating pores of the coating layer.

Fig. 18 is a diagram showing the flow of exhaust gas in the exhaust gas purifying filter of Example 7.

Fig. 19 is a cross-sectional diagram of the exhaust gas purifying filter of Example 8.

Fig. 20 is a cross-sectional diagram of the wall of the exhaust gas purifying filter as a comparison to Example 8.

Fig. 21 is a line graph showing the relationship between ceramic powder coating amount and filter pressure loss, according to Experiment Example 3.

Fig. 22 is a line graph showing the relationship between amount of diesel particulates collected by filters and filter pressure loss, according to Experiment Example 4.

Fig. 23 is a perspective view of an exhaust gas purifying filter of the prior art.

Examples 1 to 7 illustrate the technical background of the invention. A process according to the invention is described in example 8.

### Example 1

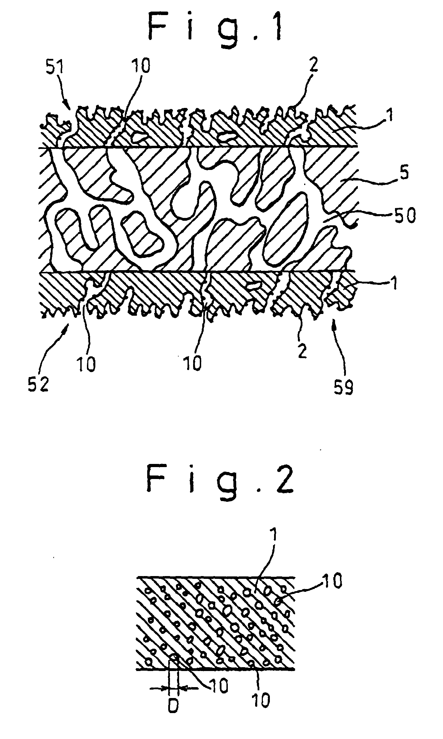

An exhaust gas purifying filter according to an example of the invention will now be explained with reference to Figs. 1 through 6.

As shown in Fig. 1, the exhaust gas purifying filter 59 of this Example has a matrix 5 with multiple thin pores 50, and a coating layer 1 provided on the upper side 51 and lower side 52 of the matrix 5. The coating layer 1 supports a catalyst 2 which purifies exhaust gas emitted from an internal combustion engine.

The coating layer 1 has communicating pores 10 which communicate from its surface to the surface of the matrix 5. As shown in Fig. 2, the communicating pores 10 are distributed within a pore size range D of 20-40 µm, and the average thin pore size is 30 µm. The porosity of the coating layer 1 is 60%. Active alumina is used as the coating layer 1. The thin pore size D of the communicating pores 10 was measured by the mercury indentation method.

The honeycomb filter matrix is coated with the coating layer 1 at 40 g per liter of apparent volume. The coating amount of the coating layer 1 was calculated based on the weight difference before and after coating.

The coating layer 1 is composed of active alumina supporting a catalyst 2 on its surface and on the walls of the communicating pores 10. The thickness of the coating layer 1 is 5-50 µm. The catalyst 2 is Pt (platinum), Rh (rhodium) or the like.

As shown in Fig. 1, the matrix 5 has multiple thin pores 50 which run through the interior in a three-dimensional network, and it is a wall flow type exhibiting a purifying effect when exhaust gas is passed through the thin pores 50. The average size of the thin pores 50 of the matrix 5 is 20-40 µm.

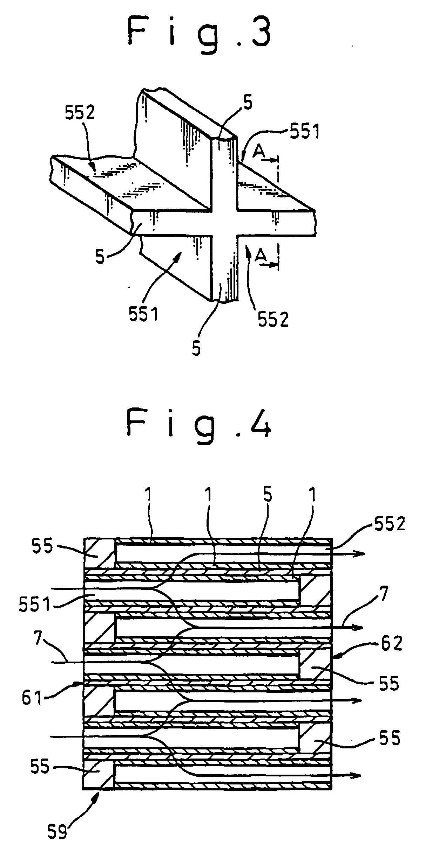

As shown in Figs. 3 and 4, the matrix 5 has a honeycomb construction with multiple fluid channels 551, 552 (see Fig. 23). Also, the fluid channel 551 at the upstream end 61 of the honeycomb is sealed with a sealing plug 55 at the downstream end 62, as shown in Fig. 4. Likewise, the fluid channel 552 at the downstream end 62 is sealed with a sealing plug 55 at the upstream end 61. These fluid channels 551 and 552 are situated in an alternatingly checkered manner.

The coating layer 1 is formed on both the surface of the fluid channel 551 at the upstream end 61 and the fluid channel 552 at the downstream end 62.

Exhaust gas 7 flows in from the fluid channel 551 at the upstream end 61, passes through the coating layer 1, the matrix 5 and then the coating layer 1, to be ejected to the fluid channel 552 at the downstream end 62.

A process for producing the above-mentioned exhaust gas purifying filter 59 will now be explained.

First, a cordierite honeycomb filter (Φ140 mm x length 130 mm, 150 cell/in² mesh, 0.45 mm wall thickness) was prepared as the matrix 5.

The ceramic powder was a mixture of 95 wt% active alumina and 5 wt% alumina solution, and pH-adjusting dilute nitric acid was added to adjust the pH to 1-3. The average pore size of the active alumina is 5-10 µm.

Next, to 100 wt% of the above-mentioned ceramic powder there was added 1.5 outer weight percent of a gas-generating substance as a communicating pore-forming material and 25 outer weight percent of carbon powder, and distilled water was further added to obtain a slurry. The particle size of the carbon powder is 10-80 µm, which is larger than the thickness of the coating layer to be formed (5-50 µm). The above-mentioned gas-generating substance was a gas inclusion material prepared by inclusion of butane gas in a thermoplastic resin followed by granulation.

The above-mentioned matrix 5 was immersed in the slurry while stirring, and then pulled out. The excess slurry was then removed by air blowing, and drying was performed at 120°C for 2 hours.

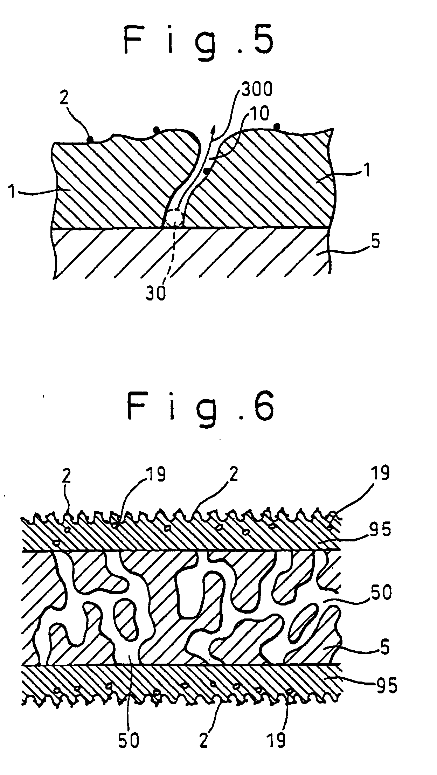

This was followed by heating at 700°C for 2 hours to sinter the ceramic powder. Thus a coating layer 1 made of ceramic powder was formed on the surface of the matrix 5. The carbon powder also burned off during the heating. Also, as shown in Fig. 5, the thermoplastic resin gas-generating substance 30 burned off, and the butane gas 300 included therein escaped out from the coating layer 1. This resulted in formation of communicating pores 10 communicating from inside to the surface of the coating layer 1.

The matrix 5 with the formed coating layer 1 was then immersed in a catalyst bath to incorporate the catalyst 2 into the coating layer 1. Thus was obtained the exhaust gas purifying filter shown in Fig. 1.

For comparison, a coating layer was prepared without using the gas-generating substance or carbon powder (Comparative Example 1). Here, as shown in Fig. 6, the communicating pores described above were not formed in the coating layer 95, and the fine pores 19 formed had an average thin pore size of only 0.5-10 µm.

In contrast, as explained above, communicating pores 10 with an average pore size of 30 µm and ranging from 20-40 µm were formed in the exhaust gas purifying filter of this example, as shown in Fig. 1.

The effect of this example will now be described.

As shown in Fig. 1, formation of multiple communicating pores 10 inside the coating layer 1 which communicate from its surface to the matrix 5 are formed in the exhaust gas purifying filter of this example. Thus, exhaust gas may pass smoothly between the surface of the coating layer 1 and the matrix 5 through the communicating pores 10. This allows the pressure loss of the filter to be reduced.

Moreover, the exhaust gas not only contacts the surface of the coating layer 1, but also enters the interior. Thus, an exhaust gas purifying catalyst supported on the coating layer provides a three-dimensional purification effect throughout the coating layer. Consequently, improvement in the purification performance of the filter 59 may be realized.

Such high purification performance and low pressure loss of the filter 59 as described above also allow it to be downsized.

Furthermore, since the catalyst 2 is supported in the coating layer 1, diesel particulates may be efficiently captured and then burned, restoring the filter. Alternatively, HC and CO in the exhaust gas may also be purified.

According to this example, as shown in Fig. 4, both sides of the matrix 5 are coated with the coating layer 1. Thus, when exhaust gas 7 passes from the upstream end 61 to the downstream end 62 of the filter 59, it passes through the coating layer 1 twice. This allows more effective purification of the exhaust gas 7.

Furthermore, such high purification performance and low pressure loss of the filter 59 as described above also allow it to be downsized.

The coating layer 1 of this example was formed on a wall flow type matrix 5 with pores 50 running through the interior, but the improvement in purification performance and control of pressure loss may also be achieved by forming it on a wall through-flow type matrix 5 with very few pores 50.

### Experiment Example 1

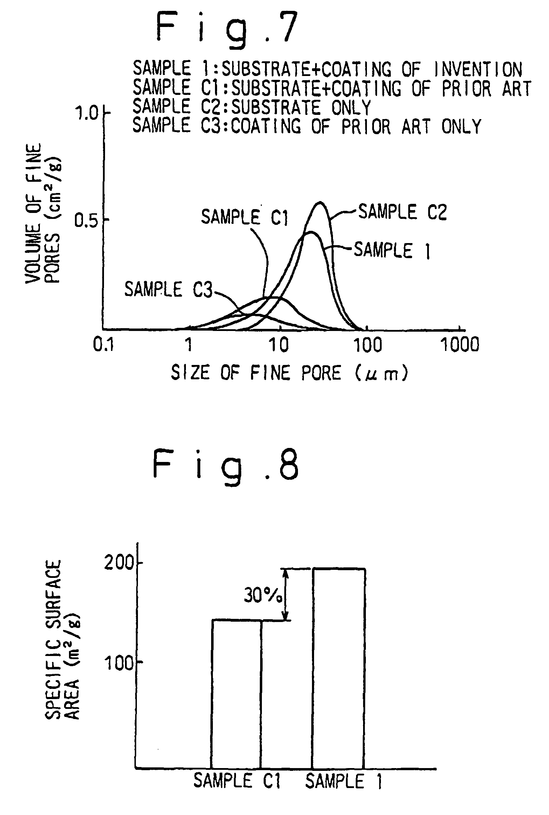

In this example, as shown in Figs. 7 to 9, the pore characteristics and purification rate of the filter of Example 1 above (hereunder referred to as "sample 1"), as well as the specific surface area of the coating layer, were measured.

The pore characteristics of the exhaust gas purifying filter were first evaluated.

The pore characteristics of the filter were evaluated based on the pore size and pore volume. The pore size and pore volume of the filter were measured by the mercury indentation method.

For comparison, the filter of Comparative Example 1 above (sample C1) wherein a coating layer with no communicating pores was formed on the matrix surface, a filter consisting of a matrix alone without a coating layer (sample C2) and a coating material alone with no communicating pores (sample C3) were also measured in the same manner.

The results are shown in Fig. 7.

As seen in this graph, the pore characteristics of the sample 1 filter were close to those of the filter consisting of the matrix alone (sample C2). On the other hand, the pore characteristics of the filter wherein the matrix was coated with a coating layer with no communicating pores (sample C1) were close to the pore characteristics of the coating material alone (sample C3), both the pore size and the pore volume of which were small. This demonstrates that by actively forming communicating pores in the coating layer which communicate from its surface to the matrix, the pore characteristics approach that of the matrix, to provide a lower pressure loss of the filter.

The specific surface area of the coating layer of the sample 1 filter was then measured. For comparison, sample C1 was also measured in the same manner.

The results are shown in Fig. 8. This graph shows that the specific surface area of the coating layer of sample 1 was 30% greater than that of the coating layer of sample C1.

The pressure loss of the sample 1 filter was then measured.

The filter was placed in an engine exhaust gas passage, with constant measuring conditions using a 2.2 liter DI (direct injection) engine at 2000 rpm, 100 Nm.

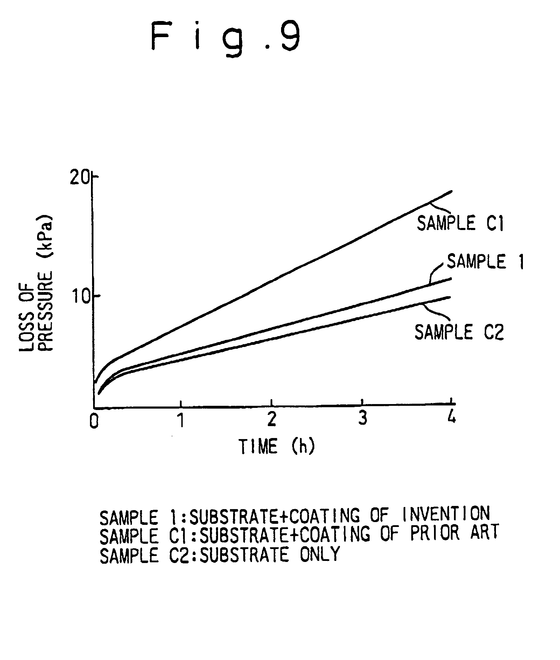

For comparison, samples C1 and C2 were also measured in the same manner. The results are shown in Fig. 9.

This graph shows that the sample 1 filter exhibited about the same low pressure loss as the filter consisting of the matrix alone (sample C2). On the other hand, the filter having the coating layer with no communicating pores formed on the matrix surface (sample C1) exhibited a notably increased pressure loss with time.

This demonstrates that the values for the pressure loss of the filter with communicating pores formed in the coating layer are about as low as those of the filter consisting of the matrix alone.

These results are believed to be attributable to the reason described below.

That is, despite the denseness of the coating layer itself, the pore volume was greater due to formation of the communicating pores. Thus, the sample 1 filter exhibited pore characteristics close to those of the matrix. This was likely the reason for the pressure loss being about as low as that of the matrix.

The purification performance of the sample 1 filter was measured next.

The measurement was made under constant measuring conditions of an engine rotation speed of 2000 rpm, 100 Nm. The purification rate was measured for HC, CO and NOₓ, and is represented here using the values for HC.

For comparison, the filter having the coating layer with no communicating pores (sample C1) was also measured in the same manner.

As a result, the purification rate was 98% for sample 1 and 92% for sample C1.

This demonstrates that the sample 1 filter exhibits superior purification performance.

### Experiment Example 2

In this example, as shown in Figs. 10 to 12, the effects of the average pores size and porosity of the coating layer on the pressure loss and purification performance of the filter were measured.

First, the effect of the average pore size and porosity of the coating layer on the pressure loss of the filter was measured.

The average pore size of the coating layer and the pressure loss of the filter were measured by the same methods as in Example 1. The results are shown in Fig. 10.

As shown in this graph, a larger average pore size of the coating layer provides lower pressure loss of the filter. With a constant average pore size, higher porosity of the coating layer also provides lower pressure loss of the filter.

The effects of the average pore size of the coating layer and the porosity of the filter on the purification performance of the filter were then measured. The methods of measurement were the same as described above. The results are shown in Fig. 11.

As shown in this graph, a smaller average pore size of the coating layer provides a higher exhaust gas purification rate of the filter. With a constant average pore size, a lower porosity of the coating layer also provides a higher purification rate.

Fig. 12 shows, based on these measurement results, the average pore size and porosity of the coating layer which give a low filter pressure loss of 10 kPa or less and a high purification rate of 90% or greater.

In the same diagram, points A through D represent critical values for a range of average pore sizes and porosities of the coating layer, which give the aforementioned superior pressure loss and purification performance. The respective average pore sizes and porosities are: point A (10 µm, 80%), point B (20 µm, 60%), point C (60 µm, 30%) and point D (50 µm, 70%).

The range defined by the lines connecting points A through D (unshaded area) represents a pressure loss of 10 kPa or less and a purification rate of 90% or greater. Filters with characteristics within this range exhibit low pressure loss and a high purification rate.

On the other hand, the area under lines AB and BC (downward sloping shaded area) represents a pressure loss exceeding 10 kPa. The area under lines AD and DC (upward sloping shaded area) represents a purification rate of less than 90%.

### Example 2

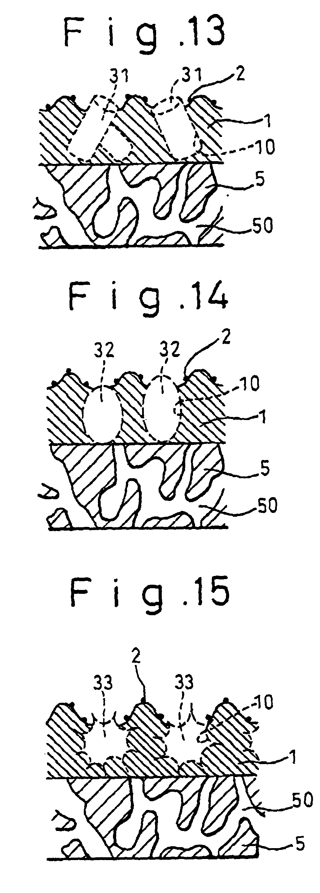

This example, as shown in Fig. 13, is a case in which communicating pores were formed using a cylindrical communicating pore-forming material 31.

The communicating pore-forming material 31 was a resin which burns off during heating of the ceramic powder, and an example thereof is Polyester (tradename) of Nihon Synthetic Chemical Co. The communicating pore-forming material 31 has a diameter of 10-30 µm and a length of 50 µm. The thickness of the coating layer 1 is 5-50 µm.

The communicating pore-forming material 31 is mixed with the ceramic powder, dried, and then heated. This burns off the communicating pore-forming material 31, forming communicating pores 10 in the coating layer 1 which communicate from its surface to the matrix 5.

The communicating pore-forming material 31 may be prism-shaped or polygonal instead of cylindrical as described above, and communicating pores 10 may be formed so long as they are at least as large as the thickness of the coating layer 1.

The coating layer 1 consists of active alumina, and the exhaust gas purifying catalyst 2 is supported on its surface and the walls of the communicating pores 10.

The filter is otherwise the same as in Example 1. The effect obtained in this example is the same as in Example 1.

### Example 3

In the exhaust gas purifying filter of this example, as shown in Fig. 14, the communicating pores 10 are formed using a particulate communicating pore-forming material 32.

Resin or wax is used as the communicating pore-forming material 32. The long diameter of the communicating pore-forming material 32 is 40-100 µm, and the short diameter is 10-60 µm.

The coating layer 1 consists of active alumina, and the exhaust gas purifying catalyst 2 is supported on its surface and the walls of the communicating pores 10. The thickness of the coating layer 1 is 5-50 µm.

The filter is otherwise the same as in Example 1. The effect obtained in this example is the same as in Example 1.

### Example 4

In the exhaust gas purifying filter of this example, as shown in Fig. 15, the communicating pores 10 are formed using whiskers as the communicating pore-forming material 33.

The whiskers are carbon whiskers with a diameter of 40 µm.

The coating layer 1 consists of active alumina, and the exhaust gas purifying catalyst 2 is supported on its surface and the walls of the communicating pores 10. The thickness of the coating layer 1 is 5-50 µm.

The filter is otherwise the same as in Example 1. The effect obtained in this example is the same as in Example 1.

### Example 5

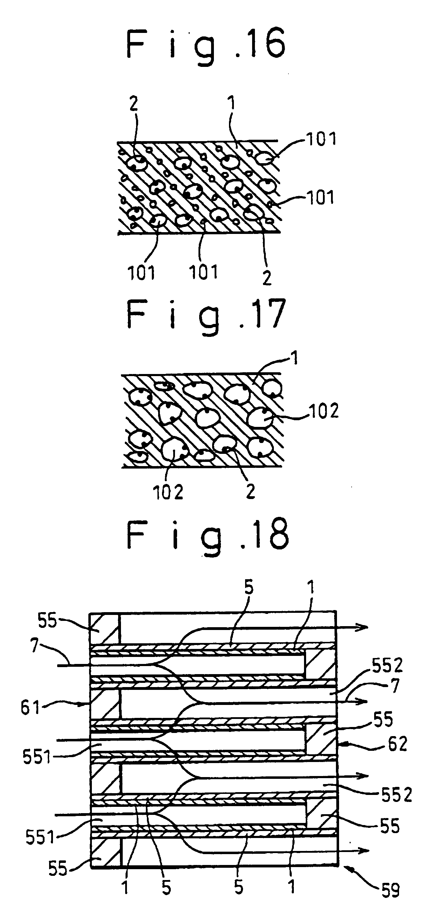

In the filter of this example, as shown in Fig. 16, communicating pores 101 with various pore sizes are formed in the coating layer 1.

The pore sizes of the communicating pores 101 are widely distributed between 10 µm and 80 µm, with an average pore size of 40 µm.

The coating layer 1 consists of active alumina, and the exhaust gas purifying catalyst 2 is supported on its surface and the walls of the communicating pores 101. The thickness of the coating layer 1 is 5-50 µm.

The communicating pores 101 were formed using communicating pore-forming materials (gas-generating substances and carbon powders) with various sizes ranging from 10 µm to 80 µm. These communicating pore-forming materials with different sizes were added to the ceramic powder, and distilled water was added to make slurry. The matrix was immersed in the slurry, the excess slurry was removed, and then the matrix was dried and heated to obtain the exhaust gas purifying filter.

The filter is otherwise the same as in Example 1. The effect obtained in this example is the same as in Example 1.

### Example 6

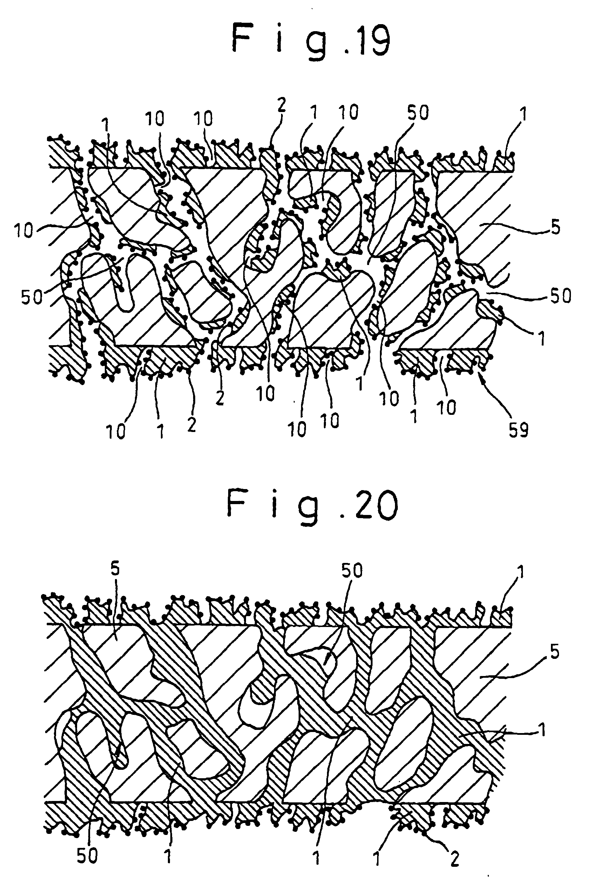

In the filter of this example, as shown in Fig. 17, communicating pores 102 with relatively large pore sizes are formed in the coating layer 1. The pore sizes of the communicating pores 102 are distributed between 40 µm and 100 µm, and the average pore size is 60 µm. The filter is otherwise the same as in Example 5.

In this example, the relatively large pore size of the communicating pores provides an even greater reduction in the pressure loss. The other effects are the same as in Example 5.

### Example 7

In the filter of this example, as shown in Fig. 18, the coating layer 1 is formed on the surface of the matrix 5 at the end of the fluid channel 551 at the upstream end 61, and no coating layer 1 is formed at the end of the fluid channel 552 at the downstream end 62.

This filter is produced by immersing only one side of the matrix in slurry containing ceramic powder. The filter is otherwise the same as in Example 1.

In this example, since the coating layer 1 is formed only at the end of the fluid channel 551 at the upstream end, the exhaust gas to be purified passes through the matrix 5 after being purified by the coating layer 1, and flows out toward the downstream end 62. Thus, the diesel particulates contained in the exhaust gas may be effectively collected while allowing the pressure loss to be lower than a filter with coating layers on both sides of the matrix.

### Example 8

As shown in Fig. 19, the filter of present invention differs from prior art in that the coating layer 1 is coated not only on the upper and lower surface of the matrix 5, but also on the surface of the pores 50 inside the matrix.

The coating layer 1 coated on the upper and lower surface of the matrix 5 and the surface of the pores 50 has communicating pores 10 which communicate from its surface to the surface of the matrix 5 or the inner surface of the pores inside the matrix. The average pore size of the communicating pores 10 is 20 µm. The porosity of the coating layer 1 is 62%, and its thickness is 2-20 µm. Active alumina is used as the coating layer 1.

An exhaust gas-purifying catalyst 2 such as Pt or Rh is supported on the surface of the coating layer and on the inner walls of the communicating pores 10. The matrix 5 has multiple pores 50 which run through the interior in a three-dimensional network. The average size of the pores 50 is 20-40 µm.

The production of the above-mentioned exhaust gas-purifying filter is basically the same as in Example 1 above. It differs, however, in that the average particle size of the communicating pore-forming material is 10-30 µm, and the honeycomb filter matrix is coated with the coating layer at 65 g per liter of apparent volume.

In this example, the coating layer 1 is formed not only on the upper and lower surface of the matrix 5 but also on the surface of the pores 50 inside the matrix 5. Thus, the catalyst 2 supported on the coating layer adheres not only to the upper and lower surface of the matrix 5, but also to the surface of the pores 50 therein. As a result, the exhaust gas contact surface area of the catalyst 2 is increased, thus notably improving the exhaust gas purification performance.

Furthermore, the surface of the pores 50 is coated with the coating layer 1 with communicating pores 10. Consequently, the pores 50 do not become plugged, thus allowing smooth passage of exhaust gas.

When the filter was produced without using a communicating pore-forming material, as shown in Fig. 20, the pores 50 of the matrix 5 were occluded by the coating layer 1 (ceramic powder).

Further, the coating layer on the surface of the inner pores in the filter matrix had continuous pores communicating form the surface of the filter matrix to the surface of the inner pores, resulting in increase in the surface area of the matrix and improving the performance of the oxidation reaction as a catalyst of the coating layer.

### Experiment Example 3

In this example, the relationship between coating amount of the ceramic powder and pressure loss of the filter was measured.

The ceramic powder used for the measurement was of the same type and size as the ceramic powder in Example 8. The coating amount of the ceramic powder was varied between 0 and 75 g per liter of apparent volume of the honeycomb filter matrix. The filter was otherwise made in the same manner as in Example 8, to prepare sample 2.

For comparison, a filter was made without using a communicating pore-forming material, to prepare sample C4.

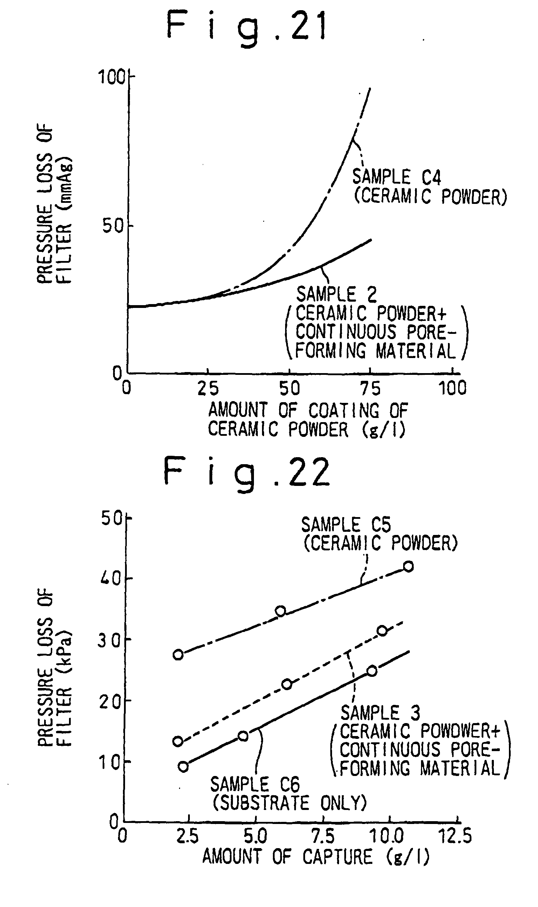

Industrial factory air (5 kg/cm²) was passed from the upstream end to the downstream end of the filter at 200 liters/min. The pressure loss of the filter during this time was measured. The results are shown in Fig. 21.

As shown in this graph, the sample 2 filter had virtually no change in pressure loss even with an increased coating amount of the ceramic powder. On the other hand, the pressure loss of the sample C4 filter increased drastically as the coating amount of the ceramic powder increased.

This demonstrates that low pressure loss of the filter is sustained by forming communicating pores which communicate from the surface of the coating layer to the surface of the matrix or the inner surface of the pores inside the matrix, as according to the invention. It also demonstrates that a low pressure loss filter may be produced when the coating amount of the ceramic powder is 10-50 grams per liter of apparent volume of the honeycomb filter.

### Experiment Example 4

According to this example, the relationship between the amount of exhaust gas diesel particulates collected by the exhaust gas-purifying filter and pressure loss of the filter was measured.

The filter used for the measurement was the filter produced in Example 8, as sample 3.

For comparison, the same measurement was made for a filter having a coating layer formed without using a communicating pore-forming material, as sample C5, and for a filter having the catalyst adhering directly to the matrix without using ceramic powder and a communicating pore-forming material, as sample C6. The thickness of the coating layer of sample 3 and sample C5 was 2-20 µm, and the coating amount of the coating layer was 65 g per liter of apparent volume of the honeycomb filter.

For the measurement, the filters were placed in an engine exhaust gas passage. The engine used was a diesel engine with a cylinder capacity of 4.2 liters, which was driven at 1600 rpm with the accelerator fully open (W.O.T.). The amount of diesel particulates collected by the filter and the pressure loss of the filter were measured during this time, and the results are shown in Fig. 22.

As shown by this graph, samples 3, C5 and C6 all had large pressure loss of the filters as the amount of collected diesel particulates increased. Also, the pressure loss of the filter with the coating layer containing the communicating pore-forming material (sample 3) was no more than 1.5 times the pressure loss of the filter with the catalyst directly adhering to the matrix (sample C6). On the other hand, the filter with the coating layer containing no communicating pore-forming material (sample C5) had 2 to 3 times the amount of pressure loss as sample C6.

This demonstrates that formation of communicating pores in the coating layer by addition of a communicating pore-forming material to ceramic powder results in an exhaust gas-purifying filter with lower pressure loss than with no addition of a communicating pore-forming material.

## Claims

1. A process for producing an exhaust gas purifying filter comprising the steps of
coating a mixture of ceramic powder and a communicating pore-forming material onto the surface of a matrix (5) with multiple pores (50), while introducing said mixture onto the inner surface of the pores (50) inside said matrix (5), and
then heating said mixture to sinter said ceramic powder and form a coating layer (1) on the surface of said matrix (5) and the inner surface of the pores (50) in said matrix (5), while burning off said communicating pore-forming material in order to form communicating pores (10) in the coating layer (1) which communicate from its surface to the surface of the matrix (5) and the inner surface of the pores (50) in the matrix (5).

2. The process for producing an exhaust gas purifying filter according to claim 1, wherein said communicating pore-forming material is a gas-generating substance (30).

3. The process for producing an exhaust gas purifying filter according to claim 1, wherein said communicating pore-forming material is a flammable substance with a size which is either equal to the thickness of the coating layer (1) or larger than the thickness of the coating layer (1).

4. A process for producing an exhaust gas purifying filter, comprising the steps of
coating a plurality of ceramic powders with different shrinkage factors onto the surface of said matrix (5) with multiple pores (50), while introducing said ceramic powders onto the inner surface of the pores (50) inside said matrix (5), and
then heating said ceramic powders to sinter said ceramic powders and form a coating layer (1) on the surface of said matrix (5) and the inner surface of the pores (50) inside said matrix (5), while generating multiple microcracks in said coating layer (1) in order to form communicating pores (10) in the coating layer (1) which communicate from its surface to the surface of the matrix (5) and the inner surface of the pores (50) in the matrix (5).

5. A process for producing an exhaust gas purifying filter, comprising the step of
adding a high viscosity oily substance to a slurry containing a ceramic powder and vigorously mixing said slurry to form fine oily particles made of the high viscosity oily substance, and
then coating said slurry onto the surface of said matrix (5) with multiple pores (50) while introducing the slurry onto the inner surface of the pores (50) inside said matrix (5), and
then heating said slurry to sinter said ceramic powder to form a coating layer (1) on the surface of said matrix (5) and the inner surface of said matrix (5), while generating gas inside said coating layer (1) due to the fine oily particles, thus eliminating said fine oily particles and causing said gas to escape out from the coating layer (1) in order to form said communicating pores (10) which communicate from the surface of the coating layer (1) to the surface of the matrix (5) and the inner surface of the pores (50) inside the matrix (5).

6. A process for producing an exhaust gas purifying filter, comprising the steps of
coating a foaming material which foams into a network onto the surface of a matrix (5) with multiple pores (50), while introducing said foaming material onto the inner surface of the pores (50) inside said matrix (5),
foaming said foaming material, and
then coating the surface of the foamed foaming material with a slurry containing a ceramic powder to a thickness which is either equal to or larger than the size of said foamed foaming material, and
heating it to sinter said ceramic powder to form a coating layer (1) on the surface of said matrix (5) and the inner surface of the pores (50) inside said matrix (5), while burning off said foaming material in order to form communicating pores (10) which communicate as a network from the surface of the coating layer (1) to the surface of the matrix (5) and the inner surface of the pores (50) inside the matrix (5).

7. The process for producing an exhaust gas purifying filter according to any of claims 1 to 6, wherein the average pore size of said communicating pores (10) is 10-60 µm.

8. The process for producing an exhaust gas purifying filter according to any of claims 1 to 7, wherein the porosity of the said coating layer (1) is 30-80%.

9. An exhaust gas puryfing filter, having a matrix (5) with multiple pores (50) and a coating layer (1) provided on the surface of said matrix (5) and on the inner surface of the pores (50) inside said matrix (5), said coating layer (1) supporting a catalyst (2) which purifies exhaust gas emitted from an internal combustion engine,
said coating layer (1) having communicating pores (10) which communicate from the surface of said coating layer (1) to the surface of said matrix (5) and to the inner surface of the pores (50) inside the matrix, said coating layer (1) having a porosity of 30-80%.

10. The exhaust gas purifying filter according to claim 9, wherein the average pore size of said communicating pores (10) is 10-60 µm.

## Patentansprüche

1. Verfahren zur Herstellung eines Abgasreinigungsfilters, das die Schritte aufweist:
Beschichten der Oberfläche einer Matrix (5) mit mehreren Poren (50) mit einer Mischung aus Keramikpulver und einem verbindenden porenbildenden Material, während die Mischung auf die Innenfläche der Poren (50) in der Matrix (5) eingebracht wird und
anschließendes Erwärmen der Mischung zum Sintern des Keramikpulvers und Bilden einer Überzugsschicht (1) auf der Oberfläche der Matrix (5) und der Innenfläche der Poren (50) in der Matrix (5), während das verbindende porenbildende Material abgebrannt wird, um in der Überzugsschicht (1) die verbindenden Poren (10) auszubilden, die von ihrer Oberfläche zur Oberfläche der Matrix (5) und zur Innenfläche der Poren (50) in der Matrix (5) Verbindung herstellen.

2. Verfahren zur Herstellung eines Abgasreinigungsfilters nach Anspruch 1, wobei das verbindende porenbildende Material eine Gaserzeugungssubstanz (30) ist.

3. Verfahren zur Herstellung eines Abgasreinigungsfilters nach Anspruch 1, wobei das verbindende porenbildende Material eine entflammbare Substanz mit einer Größe ist, die entweder gleich der Dicke der Überzugsschicht (1) oder größer als die Dicke der Überzugsschicht (1) ist.

4. Verfahren zur Herstellung eines Abgasreinigungsfilters, das die Schritte aufweist:
Beschichten der Oberfläche der Matrix (5) mit mehreren Poren (50) mit einer Vielzahl von Keramikpulvern mit unterschiedlichen Schrumpfungsfaktoren, während die Keramikpulver auf die Innenfläche der Poren (50) in der Matrix (5) eingebracht werden, und
anschließendes Erwärmen der Keramikpulver zum Sintern der Keramikpulver und Bilden einer Überzugsschicht (1) auf der Oberfläche der Matrix (5) und der Innenfläche der Poren (50) in der Matrix (5), während eine Vielzahl an Mikrorissen in der Überzugsschicht (1) erzeugt werden, um die verbindenden Poren (10) in der Überzugsschicht (1) auszubilden, die von ihrer Oberfläche zur Oberfläche der Matrix (5) und zur Innenfläche der Poren (50) in der Matrix (5) Verbindung herstellen.

5. Verfahren zur Herstellung eines Abgasreinigungsfilters, das den Schritt aufweist:
Hinzufügen einer hochviskosen öligen Substanz zu einem Schlamm, der ein Keramikpulver enthält, und kräftiges Mischen des Schlammes zum Ausbilden von feinen öligen Teilchen, die aus der hochviskosen öligen Substanz gebildet sind, und
anschließendes Beschichten der Oberfläche der Matrix (5) mit mehreren Poren (50) mit dem Schlamm, während der Schlamm auf die Innenfläche der Poren (50) in der Matrix (5) eingebracht wird, und
anschließendes Erwärmen des Schlamms zum Sintern des Keramikpulvers, um auf der Oberfläche der Matrix (5) und der Innenfläche der Matrix (5) eine Überzugsschicht (1) auszubilden, während in der Überzugsschicht (1) aufgrund der feinen öligen Teilchen Gas erzeugt wird, wodurch die feinen öligen Teilchen beseitigt werden und bewirkt wird, daß Gas aus der Überzugsschicht (1) entweicht, damit die verbindenden Poren (10) ausgebildet werden, die von der Oberfläche der Überzugsschicht (1) zur Oberfläche der Matrix (5) und zur Innenfläche der Poren (50) in der Matrix (5) Verbindung herstellen.

6. Verfahren zur Herstellung eines Abgasreinigungsfilters, das die Schritte aufweist:
Beschichten der Oberfläche einer Matrix (5) mit mehreren Poren (50) mit einem Schaummaterial, das zu einer Vernetzung aufschäumt, während das Schaummaterial auf die Innenfläche der Poren (50) in der Matrix (5) eingebracht wird,
Aufschäumen des Schaummaterials und
anschließendes Beschichten der Oberfläche des aufgeschäumten Schaummaterials mit einem Schlamm, der Keramikpulver enthält, auf eine Dicke, die entweder gleich der Größe des aufgeschäumten Schaummaterials oder größer als diese ist, und
Erwärmen von diesem zum Sintern des Keramikpulvers, um eine Überzugsschicht (1) auf der Oberfläche der Matrix (5) und der Innenfläche der Poren (50) in der Matrix (5) auszubilden, während das Schaummaterial abgebrannt wird, um verbindende Poren (10) auszubilden, die als eine Vernetzung von der Oberfläche der Überzugsschicht (1) zur Oberfläche der Matrix (5) und zur Innenfläche der Poren (50) in der Matrix (5) Verbindung herstellen.

7. Verfahren zur Herstellung eines Abgasreinigungsfilters nach einem der Ansprüche 1 bis 6, wobei die mittlere Porengröße der verbindenden Poren (10) 10 bis 60 µm beträgt.

8. Verfahren zur Herstellung eines Abgasreinigungsfilters nach einem der Ansprüche 1 bis 7, wobei die Porösität der Überzugsschicht 30 bis 80 % beträgt.

9. Abgasreinigungsfilter mit einer Matrix (5) mit mehreren Poren und einer Überzugsschicht (1), die auf der Oberfläche der Matrix (5) und auf der Innenfläche der Poren (50) in der Matrix vorgesehen ist, wobei die Überzugsschicht (1) einen Katalysator (2) trägt, der von einem Verbrennungsmotor abgegebenes Abgas reinigt,
wobei die Überzugsschicht (1) verbindende Poren (10) hat, die von der Oberfläche der Überzugsschicht (1) zur Oberfläche der Matrix (5) und zur Innenfläche der Poren (50) in der Matrix Verbindung herstellen, wobei die Überzugsschicht (1) eine Porösität von 30 bis 80 % hat.

10. Abgasreinigungsfilter nach Anspruch 9, wobei die mittlere Porengröße der verbindenden Poren (10) 10 bis 60 µm beträgt.

## Revendications

1. Procédé de production d'un filtre purifiant les gaz d'échappement comprenant les étapes consistant à
déposer sous la forme d'un revêtement un mélange de poudre de céramique et d'un matériau formant des pores communiquants sur la surface d'une matrice (5) ayant des pores multiples (50), en introduisant ledit mélange sur la surface intérieure des pores (50) à l'intérieur de ladite matrice (5), et
chauffer ensuite ledit mélange pour fritter ladite poudre de céramique et former une couche de revêtement (1) sur la surface de ladite matrice (5) et la surface intérieure des pores (50) dans ladite matrice (5), tout en calcinant ledit matériau formant des pores communiquants dans le but de former des pores communiquants (10) dans la couche de revêtement (1) qui communiquent de sa surface à la surface de la matrice (5) et la surface intérieure des pores (50) dans la matrice (5).

2. Procédé de production d'un filtre purifiant les gaz d'échappement selon la revendication 1, dans lequel ledit matériau formant des pores communiquants est une substance productrice de gaz (30).

3. Procédé de production d'un filtre purifiant les gaz d'échappement selon la revendication 1, dans lequel ledit matériau formant des pores communiquants est une substance inflammable présentant une taille qui est supérieure ou égale à l'épaisseur de la couche de revêtement (1).

4. Procédé de production d'un filtre purifiant les gaz d'échappement, comprenant les étapes consistant à
appliquer sous la forme d'un revêtement plusieurs poudres de céramique présentant des facteurs de retrait différents sur la surface de ladite matrice (5) présentant des pores multiples (50), tout en introduisant lesdites poudres de céramique sur la surface intérieure des pores (50) à l'intérieur de ladite matrice (5), et
chauffer ensuite lesdites poudres de céramique pour fritter lesdites poudres de céramique et former une couche de revêtement (1) sur la surface de ladite matrice (5) et la surface intérieure des pores (50) à l'intérieur de ladite matrice (5), tout en produisant de multiples microfissures dans ladite couche de revêtement (1) dans le but de former des pores communiquants (10) dans la couche de revêtement (1) qui communiquent de sa surface à la surface de la matrice (5) et la surface intérieure des pores (50) dans la matrice (5).

5. Procédé de production d'un filtre purifiant les gaz d'échappement, comprenant les étapes consistant à
ajouter une substance huileuse de viscosité élevée à une suspension contenant une poudre de céramique et mélanger énergiquement ladite suspension pour former de fines particules huileuses faites de la substance huileuse présentant une viscosité élevée, et
déposer ensuite sous la forme d'un revêtement ladite suspension sur la surface de ladite matrice (5) présentant des pores multiples (50) tout en introduisant la suspension sur la surface intérieure des pores (50) à l'intérieur de ladite matrice (5), et
chauffer ensuite ladite suspension pour fritter ladite poudre de céramique pour former une couche de revêtement (1) sur la surface de ladite matrice (5) et la surface intérieure de ladite matrice (5), tout en produisant du gaz à l'intérieur de ladite couche de revêtement (1) grâce aux fines particules huileuses, en éliminant ainsi lesdites fines particules huileuses et en faisant s'échapper ledit gaz de la couche de revêtement (1) de manière à former lesdits pores communiquants (10) qui communiquent de la surface de la couche de revêtement (1) à la surface de la matrice (5) et la surface intérieure des pores (50) à l'intérieur de la matrice (5).

6. Procédé de production d'un filtre purifiant les gaz d'échappement, comprenant les étapes consistant à
déposer sous la forme d'un revêtement un matériau moussant qui mousse sous la forme d'un réseau sur la surface d'une matrice (5) présentant des pores multiples (50), tout en introduisant ledit matériau moussant sur la surface intérieure des pores (50) à l'intérieur de ladite matrice (5),
transformer ledit matériau moussant en mousse, et
revêtir ensuite la surface du matériau moussant transformé en mousse d'une suspension contenant une poudre de céramique sur une épaisseur qui est supérieure ou égale à la taille dudit matériau moussant transformé en mousse, et
la chauffer pour fritter ladite poudre de céramique pour former une couche de revêtement (1) sur la surface de ladite matrice (5) et la surface intérieure des pores (50) à l'intérieur de ladite matrice (5), tout en calcinant ledit matériau moussant de manière à former des pores communiquants (10) qui communiquent sous la forme d'un réseau de la surface de la couche de revêtement (1) à la surface de la matrice (5) et la surface intérieure des pores (50) à l'intérieur de la matrice (5).

7. Procédé de production d'un filtre purifiant les gaz d'échappement selon l'une quelconque des revendications 1 à 6, dans lequel la taille de pores moyenne desdits pores communiquants (10) est de 10 à 60 µm.

8. Procédé de production d'un filtre purifiant les gaz d'échappement selon l'une quelconque des revendications 1 à 7, dans lequel la porosité de ladite couche de revêtement (1) est de 30 à 80 %,

9. Filtre purifiant les gaz d'échappement, ayant une matrice (5) présentant des pores multiples (50) et une couche de revêtement (1) appliquée sur la surface de ladite matrice (5) et sur la surface intérieure des pores (50) à l'intérieur de ladite matrice (5), ladite couche de revêtement (1) servant de support à un catalyseur'(2) qui purifie les gaz d'échappement émis par un moteur à combustion interne,
ladite couche de revêtement (1) ayant des pores communiquants (10) qui communiquent de la surface de ladite couche de revêtement (1) à la surface de ladite matrice (5) et à la surface intérieure des pores (50) à l'intérieur de la matrice, ladite couche de revêtement (1) ayant une porosité de 30 à 80 %.

10. Filtre purifiant les gaz d'échappement selon la revendication 9, dans lequel la taille de pores moyenne desdits pores communiquants (10) est de 10 à 60 µm.
